# EUROPEAN PATENT APPLICATION

(11) **EP 2 991 001 A1**
(43) Date of publication of application: **02.03.2016**
(21) Application number: 14182905.1
(22) Date of filing: 29.08.2014
(51) Int. Cl.: G06K 19/04, G06K 19/077, B65D 41/34

(54) **Sealing device with embedded identifier circuit**

(71) Applicant: NXP B.V., 5656 AG Eindhoven (NL)
(72) Inventor: Verhoeven, Henri, Redhill, Surrey RH1 1SH (GB)
(74) Representative: Hardingham, Christopher Mark

(57) **Abstract**

A sealing device for sealing a container and for indicating unauthorized opening of a container is disclosed. The sealing device includes a sealing structure, having a top surface and a side wall surface, and an identification device embedded in the sealing structure, the identification device including an identifier integrated circuit (IC) within an IC package, and an antenna having a portion internal to the IC package and a portion external to the IC package that extends along a portion of the sealing structure that forms the side wall surface. In an embodiment, because the antenna portion external to the IC package extends along the side wall surface, if the side wall surface is broken or torn when the sealing device is removed, then the identification device will be disabled.

## Description

### BACKGROUND

Many industries rely on seal integrity to indicate that sealed contents in a bottle or other container have not been tainted or otherwise tampered with. For example, connoisseurs of wine, whiskey, and other bottled spirits may check the seal on a bottle (e.g., for leaks or missing tamper evident films) and, upon finding the seal intact, may assume that the contents of the bottle have not been tainted or replaced with a counterfeit product. However, many technological improvements have been made that allow for a seal to be broken and restored without leaving any evidence or indication that the seal was broken. Because a seal can be restored, any tainting or modification to the contents may go undetected at the point of purchase. Thus, there is a need for a technique for insuring that an intact seal reliably indicates the integrity of the contents of a bottle or container.

### SUMMARY

In an embodiment, a sealing device for sealing a container is disclosed. The sealing device includes a sealing structure, having a top surface and a side wall surface, and an identification device embedded in the sealing structure, the identification device including an identifier integrated circuit (IC) within an IC package, and an antenna having a portion internal to the IC package and a portion external to the IC package that extends along a portion of the sealing structure that forms the side wall surface. In an embodiment, because the antenna portion external to the IC package extends along the side wall surface, if the side wall surface is broken or torn when the sealing device is removed, then the identification device will be disabled.

In a second embodiment, a sealing device for sealing a container is disclosed. The sealing device includes a body, the body having a first portion, a second portion, and a means for separating the first portion from the second portion, as well as an identification device embedded within the first portion and the second portion of the body, the identification device including an identifier IC within an IC package, and an antenna having a portion internal to the IC package and a portion external to the IC package that is embedded in the second portion.

In a third embodiment, a sealing device for indicating unauthorized opening of a container is disclosed. The sealing device includes a sleeve and an identification device embedded in the sleeve, the identification device including an identifier IC within an IC package, and an antenna having a portion internal to the IC package and a portion external to the IC package that extends along the sleeve.

In a fourth embodiment, a sealing device for indicating unauthorized opening of a container is disclosed. The sealing device includes an internal plug, a detachable portion coupled to the internal plug, a structural fuse between the internal plug and the detachable portion, and an identification device embedded in the internal plug and detachable portion, the identification device including an identifier IC within an IC package, and an antenna having a portion internal to the IC package and a portion external to the IC package.

Other aspects and advantages of embodiments of the present invention will become apparent from the following detailed description taken in conjunction with the accompanying drawings.

### BRIEF DESCRIPTION OF THE DRAWINGS

Fig. 1 depicts an NFC device.
Fig. 2 depicts an NFC device that includes an external antenna portion.
Fig. 3A depicts the IC package of Fig. 2 embedded in a portion of a shrink sleeve that forms a top surface of the shrink sleeve.
Fig. 3B depicts a side view of the shrink sleeve of Fig. 3A in which the external antenna portion of Fig. 2 is embedded in a portion of the shrink sleeve that forms a side wall surface of the shrink sleeve.
Fig. 3C depicts a shrink sleeve prior to application, the shrink sleeve having an IC package embedded in a portion of the sleeve forming a top surface and an external antenna portion radially embedded in a portion of the sleeve forming a side wall surface.
Fig. 3D depicts a shrink sleeve prior to application, the shrink sleeve having an IC package embedded in a portion of the sleeve forming a top surface and an external antenna portion circumferentially embedded in a portion of the sleeve forming a side wall surface.
Fig. 4A depicts a side cutaway view of a screw cap having a top surface, a threaded side wall surface, and a reduction ring formed in the side wall surface of the screw cap.
Fig. 4B depicts a side cutaway view of a bottle having threading along an outer side wall surface that matches the threading of the screw cap of Fig. 4A.
Fig. 4C depicts a side view of a structural fuse in the screw cap of Fig. 4A that includes a perforation formed by multiple holes along the length of the reduction ring.
Fig. 5A depicts a side cutaway view of a screw cap having a top surface, a threaded side wall surface, a structural fuse, and a friction ring formed on the side wall surface of the screw cap.
Fig. 5B depicts a side cutaway view of a bottle having threading along an outer side wall surface that matches the threading of the screw cap of Fig. 5A.
Fig. 5C depicts a side view of the structural fuse in the screw cap of Fig. 5A that includes a zigzag-shaped perforation.
Fig. 6A illustrates a screw cap and a bottle, similar to the embodiments of Figs. 4A - 4C and Fig. 5A - 5C, when the bottle is sealed.
Fig. 6B illustrates the screw cap and the bottle of Fig. 6A when the screw cap is torn and a portion of the screw cap is removed from the bottle.
Fig. 7A depicts a side cutaway view of an internal screw cap having a top surface, a threaded side wall surface forming an internal plug, a structural fuse, and a friction ring formed around the internal plug.
Fig. 7B depicts a side cutaway view of a bottle having internal tabs and threading along an inside surface wall that matches the threading of the internal screw cap of Fig. 7A.
Fig. 7C depicts side view of the structural fuse in the internal screw cap of Fig. 7A that includes a perforation in the side wall surface of the internal screw cap.
Fig. 8A depicts a side cutaway view of an internal plug having a top surface, a side wall surface, a structural fuse, and a friction ring formed around the side wall surface.
Fig. 8B depicts a side cutaway view of a bottle having internal tabs.
Fig. 8C depicts a side view of the structural fuse in the internal screw cap of Fig. 8A that includes a perforation in the side wall surface of the internal screw cap.
Fig. 9A illustrates a sealing structure and a bottle, similar to the embodiments of Figs. 7A - 7C and 8A - 8C, when the bottle is sealed.
Fig. 9B illustrates the sealing structure and the bottle of Fig. 9A when the sealing structure is torn and a portion of the sealing structure is removed from the bottle.
Fig. 10A depicts a side cutaway view of an internal plug having a top surface, a side wall surface, and a friction ring formed around an indentation in the side wall surface.
Fig. 10B depicts a side cutaway view of a bottle that can be sealed by the internal plug.
Fig. 10C is a perspective view of the internal plug of Fig. 10A that illustrates the friction ring and an external antenna portion of the identification device embedded in the side wall surface of the internal plug as well as the friction ring.
Fig. 11A illustrates an internal plug and a bottle, similar to the embodiment of Figs. 10A - 10C, when the bottle is sealed.
Fig. 11B illustrates the internal plug of Fig. 11A when the internal plug is removed from the bottle.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

As described above, determining whether the contents of a bottle or container have been tainted or modified is often inaccurately determined by whether a seal on the bottle or container has been broken. As a result, illegal practices or accidents, such as wine fraud or bacterial contamination, are often undetectable. In order to combat this problem, an identification device can be embedded in a sealing device such that breaking a seal on a bottle or container irreversibly damages the identification device regardless of the seal being repaired. Thus, an intact seal with an operational identification device can be relied on to indicate that the contents of a bottle or container have not been tainted or otherwise modified.

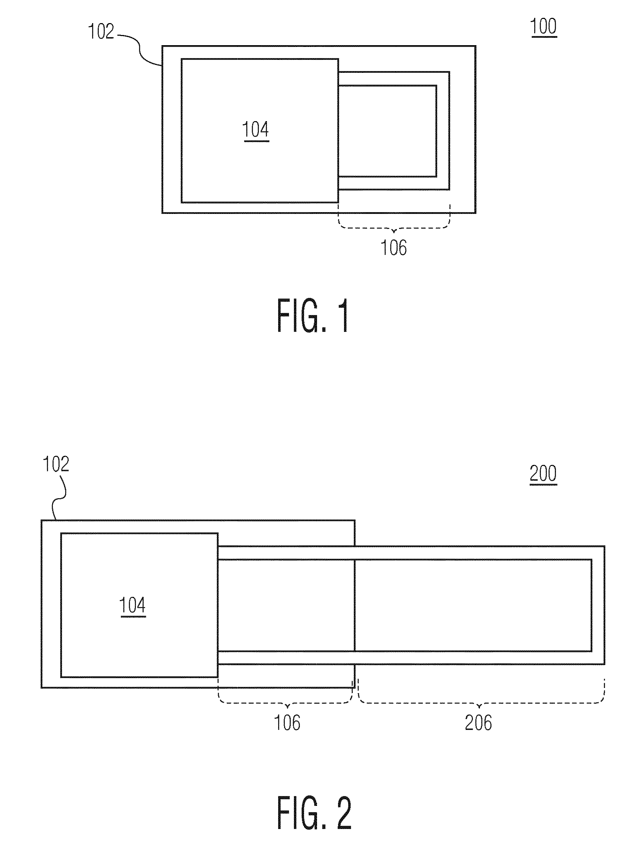

Fig. 1 depicts an example of an identification device 100, referred to herein as an NFC device, which can be embedded into a sealing device. In the example, the NFC device includes an identifier IC 104 or "chip" (herein referred to as an NFC IC) and an internal antenna 106 in an IC package 102.

Fig. 2 depicts an NFC device 200, configured with an antenna that has a portion internal to an IC package (internal antenna portion 106) and a portion external to the IC package (external antenna portion 206). As shown in Fig. 2, the NFC IC and the internal antenna portion are located within the IC package 102 and the internal antenna portion and the external antenna portion form a closed-loop antenna. Although the identifier IC is referred to herein as an NFC IC, other RFID-based ICs could be used as well. For example, the identifier IC could be an electronic product code (EPC) tag, a clipped tag, a UHF RFID tag, etc.

In an embodiment, information identifying an accepted source (e.g., the expected manufacturer of the contents of a container or bottle) can be stored on the NFC IC of Fig. 1 or Fig. 2 and retrieved by an NFC receiver via communications sent via the antenna. For example, a winery may store a cryptographic key on the NFC IC that, when received by the NFC receiver, will confirm that the sealing device in one of their wine bottles was placed on or in the bottle by the winery and not a third party. In another embodiment, other information including, for example, the product (e.g., type of wine, vintage, etc.) or the source (e.g., physical address, lot number, etc.), can also be stored the NFC IC.

However, merely identifying that the party providing the sealing device matches the manufacturer of the purported contents may be insufficient to insure that a seal has not been broken and, thus, that the contents of the sealed bottle or container have not been tainted or otherwise modified. For example, if a cork embedded with an NFC device is removed from a bottle, without the use of a corkscrew or other device that would leave evidence of the removal, and is replaced, then the NFC IC in the cork may continue to operate despite the seal having been broken. Therefore, an NFC device identifying an accepted source that is embedded in an intact seal still may not reliably indicate the integrity of the seal.

In accordance with an embodiment of the invention, an NFC device, such as the NFC device described with reference to Fig. 2, is embedded in a sealing structure of a sealing device and an external antenna portion extends along a portion of the sealing structure that forms a side wall surface of the sealing structure. In an embodiment, the NFC device is fully encased within the sealing structure. Because the external antenna portion extends along a portion of the sealing structure that forms a side wall surface, breaking or tearing of the sealing structure to remove the sealing device will likely sever the external antenna portion of the NFC device, thereby disabling the NFC device. Accordingly, although a break or tear in a sealing structure can be repaired and a seal restored, an NFC device embedded in the sealing structure will remain disabled. Thus, a functional NFC device embedded in a sealing device is a good indication that a seal has not been broken, while a disabled NFC device is a good indication that a seal has been broken.

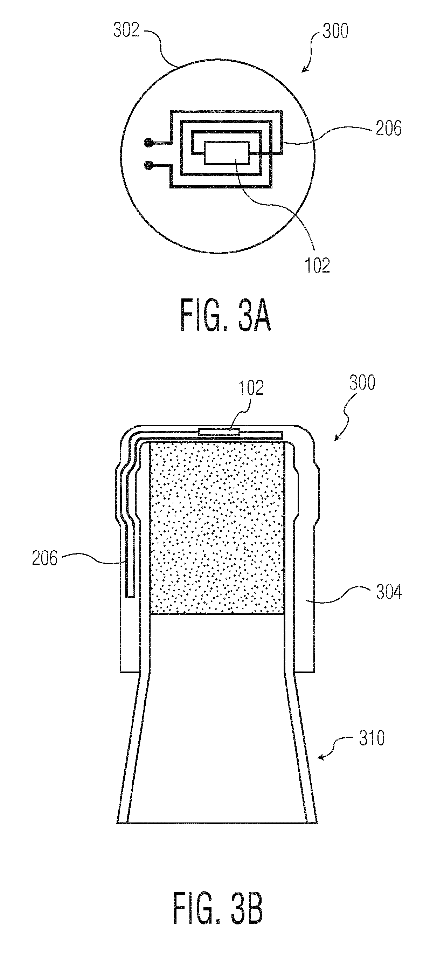

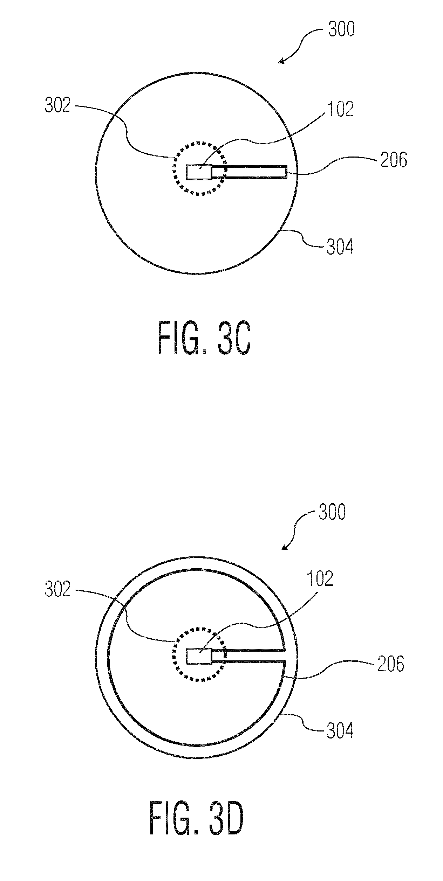

A sealing device can be configured in various different ways so that an embedded NFC device is disabled when a seal created by the sealing device is broken. For example, Figs. 3A - 3B illustrates an embodiment in which the sealing structure is a sleeve 300. In an embodiment, the sleeve can be a foil cuff adhered to a bottle with glue or any other means for adhering the sleeve to a bottle. For example, in the embodiment of Figs. 3A-3D, the sleeve is a shrink sleeve. A shrink sleeve is a sleeve or a flat sheet, typically manufactured from plastic, which, for example, shrinks around an object on which the sleeve is placed when exposed to heat or light. A common example of a shrink sleeve is a plastic foil or wrap found around many pop-top bottles. To apply a shrink sleeve to a bottle, the plastic foil or wrap is placed over the pop-top of the bottle, heat is applied, and the plastic foil or wrap is shrunk down to form around the pop-top, securing the sleeve in place and sealing the bottle. Fig. 3A depicts the IC package 102 and a portion of the external antenna portion 206 embedded in a portion of the shrink sleeve that forms a top surface 302 of the shrink sleeve. Fig. 3B depicts a side view of the shrink sleeve of Fig. 3A in which a portion of the external antenna portion 206 is embedded in a portion of the shrink sleeve that forms a side wall surface 304 of the shrink sleeve. In an embodiment, the shrink sleeve is shrunk over the opening of a bottle 310 sealed with a cork and, when the sleeve is torn or removed in order to break the seal, the external antenna is severed disabling the NFC device. In alternative embodiments, the shrink sleeve can be shrunk over a bottle sealed by a bottle cap, by a screw cap, or by other methods for sealing a bottle. Fig. 3C depicts a shrink sleeve prior to application, the shrink sleeve having an IC package embedded in a portion of the sleeve forming a top surface and an external antenna portion radially embedded in a portion of the sleeve forming a side wall surface. Fig. 3D depicts a shrink sleeve prior to application, the shrink sleeve having an IC package embedded in a portion of the sleeve forming a top surface and an external antenna portion circumferentially embedded in a portion of the sleeve forming a side wall surface.

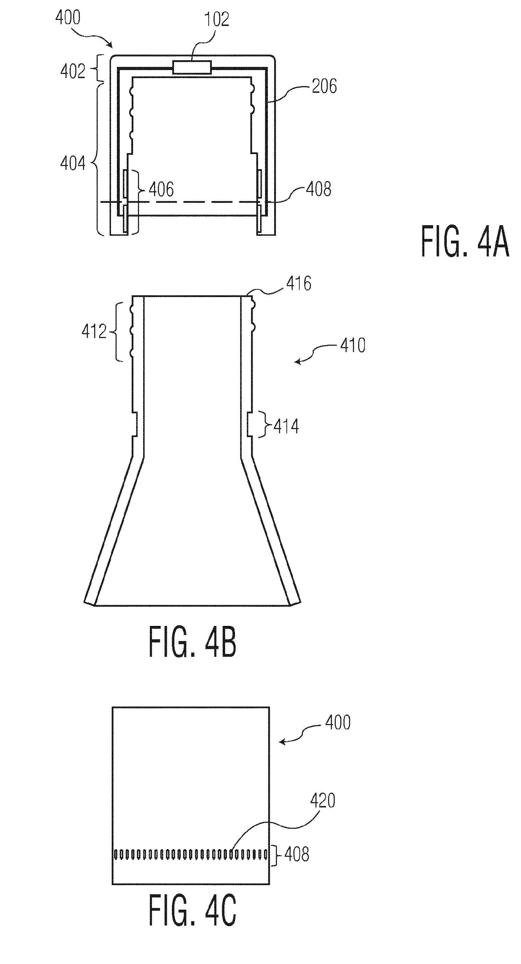

Figs. 4A - 4C illustrate an embodiment of the invention in which the sealing structure is a screw cap secured by a reduction ring. Fig. 4A depicts a side cutaway view of a screw cap 400 having a top surface 402, a threaded side wall surface 404, and a reduction ring 406 formed in the side wall surface of the screw cap. In an embodiment, the screw cap is made from hard plastic or metal and the reduction ring is bisected by a structural fuse 408. In an embodiment, the reduction ring and the structural fuse can be used to separate a first portion (i.e., the top surface) from a second portion (i.e., the side wall surface) as described below. Fig. 4B depicts a side cutaway view of a bottle 410 having threading 412 along an outer side wall surface that matches the threading of the screw cap 400 of Fig. 4A and an indentation 414 that aligns with the reduction ring when sealed. Fig. 4C depicts a side view of the structural fuse 408 in the screw cap 400 of Fig. 4A that includes a perforation 420 formed by multiple holes along the length of the reduction ring. In the embodiment of Figs. 4A - 4C, an IC package 102, such as the IC package of Fig. 2, is embedded in a portion of the top surface and the external antenna portion 206 is embedded in a portion of the side wall surface such that the external antenna portion extends across the perforation. In an embodiment, a seal is created when the threading of the screw cap is engaged with the matching threading of the bottle and the screw cap is rotated until the top surface of the screw cap comes into contact with an upper lip of the bottle. Once the seal is formed, the reduction ring along the side wall surface is crimped or pressed into the indention of the bottle, thereby locking the screw cap in place.

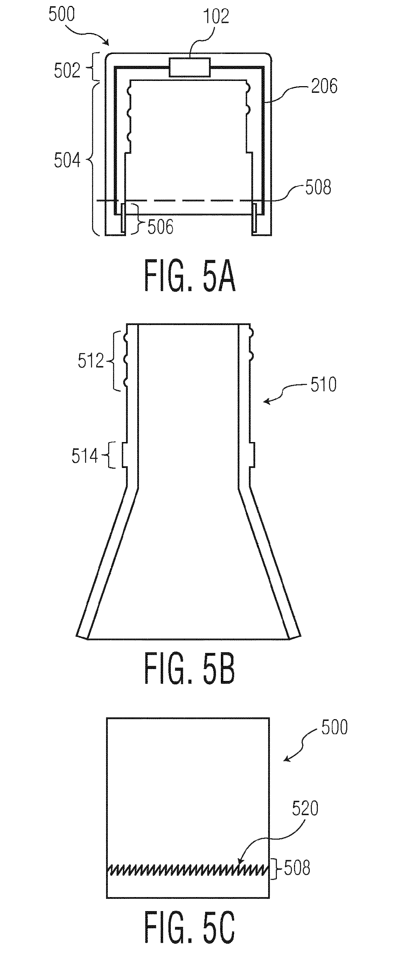

Figs. 5A - 5C illustrate an embodiment in which the sealing structure is a screw cap secured by a friction ring. Fig. 5A depicts a side cutaway view of a screw cap 500 having a top surface 502, a threaded side wall surface 504, a structural fuse 508, and a friction ring 506 formed on the side wall surface of the screw cap. In an embodiment, the friction ring is located below the structural fuse and made of a high friction material (e.g., rubber, wax, silicone gel). In an embodiment, the friction ring and the structural fuse can be used to separate a first portion (i.e., the top surface) from a second portion (i.e., the side wall surface) as described below. Fig. 5B depicts a side cutaway view of a bottle 510 having threading 512 along an outer side wall surface that matches the threading of the screw cap 500 of Fig. 5A and external tabs 514 that align with the friction ring when sealed. Fig. 5C depicts a side view of the structural fuse 508 in the screw cap 500 of Fig. 5A that includes a zigzag-shaped perforation 520. In the embodiment of Figs. 5A - 5C, an IC package 102, such as the IC package of Fig. 2, is embedded in a portion of the top surface and the external antenna portion 206 is embedded in a portion of the screw cap forming the side wall surface such that the external antenna portion extends across the perforation. In an embodiment, a seal is created when the threading along the side wall surface of the screw cap is engaged with the matching threading along the side wall surface of the bottle of Fig. 5B and the screw cap is rotated until a friction ring along the side wall surface engages with the sides of the bottle, thereby preventing further rotation and locking the screw cap in place.

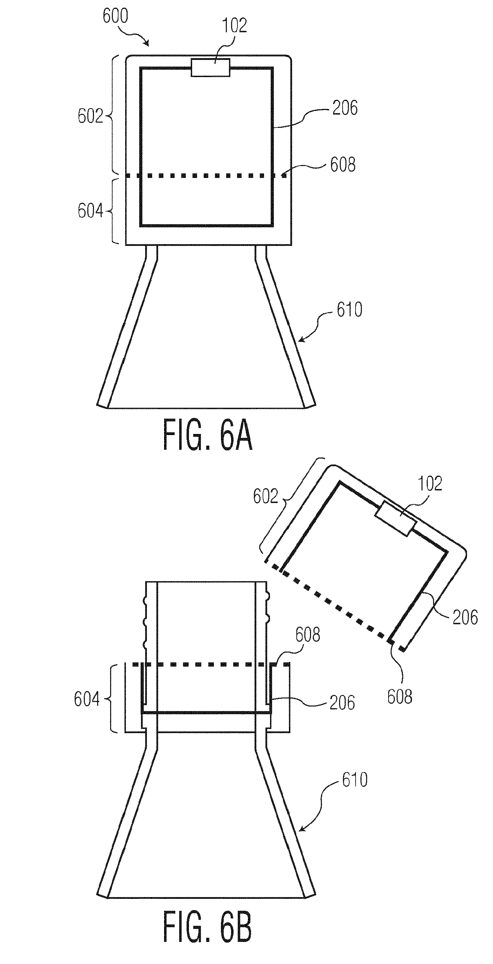

Fig. 6A illustrates a screw cap 600 and a bottle 610, similar to the embodiments of Figs. 4A - 4C or Fig. 5A - 5C, when the bottle is sealed. The seals formed in the embodiments described with reference to Figs. 4A - 4C and 5A - 5C can be broken by rotating the screw cap. Since the ring, reduction or friction, is locked into place, rotating the screw cap causes the structural fuse 608 to tear and separates the portion of the screw cap below the fuse 604 from the portion of the screw cap above the fuse 602. Fig. 6B illustrates the screw cap of Fig. 6A when the structural fuse 608 is torn and a portion of the screw cap is removed from a bottle. As illustrated, a portion of the screw cap below the fuse 604 is separated from a portion of the screw cap above the fuse 602. Because the external antenna portion 206 extends through both portions of the screw cap, the external antenna portion will be severed when the portions are separated. Because the external antenna portion is severed, the NFC device will be disabled.

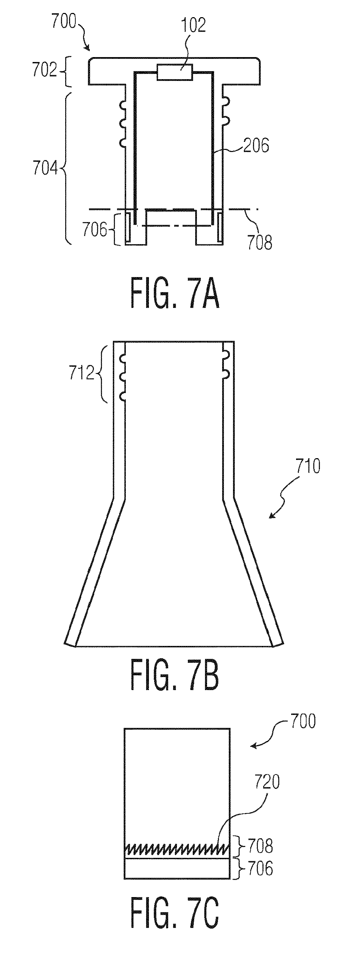

Figs. 7A - 7C illustrate an embodiment of the invention in which the sealing structure is an internal screw cap configured to fit within an opening of a container or bottle to be sealed and is secured by a friction ring. Fig. 7A depicts a side cutaway view of an internal screw cap 700 having a top surface 702, a side wall surface forming an internal plug 704, a structural fuse 708, and a friction ring 706 formed around the internal plug. In an embodiment, the friction ring is located below the structural fuse. In an embodiment, the friction ring and the structural fuse can be used to separate a first portion (i.e., the top surface) from a second portion (i.e., the side wall surface) as described below. Fig. 7B depicts a side cutaway view of a bottle 710 that can be sealed by the internal screw cap, the bottle having threading 712 along an inside surface wall that matches threading of the internal screw cap. Fig. 7C depicts a side view of the structural fuse 708 in the internal screw cap of Fig. 7A that includes a perforation 720 in the side wall surface of the internal screw cap. In the embodiment of Figs. 7A - 7C, an IC package 102, such as the IC package of Fig. 2, is embedded in a portion of the top surface and the external antenna portion 206 is embedded in a portion of the internal plug forming the side wall surface such that the external antenna portion extends across the perforation. In an embodiment, a seal is created between the internal screw cap and the bottle when the threading along the side wall surface of the internal screw cap is engaged with the matching threading along the inside surface wall of the bottle and the internal screw cap is rotated until the friction ring along the side wall surface of the internal screw cap engages with the internal tabs of the bottle, thereby preventing further rotation of the internal screw cap and locking the internal screw cap in place.

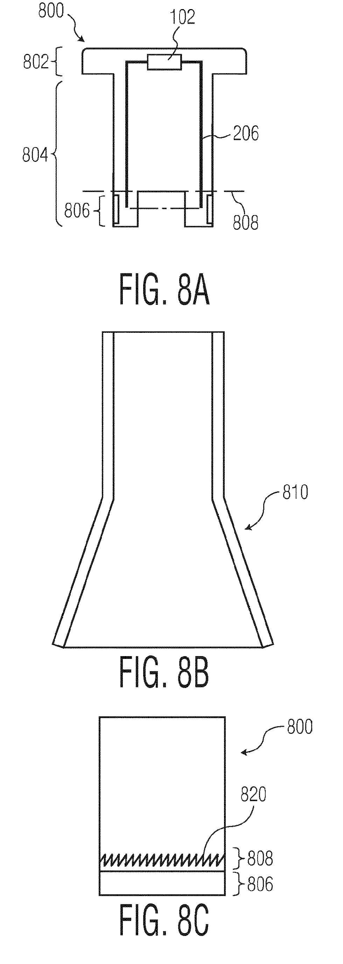

Figs. 8A - 8C illustrate an embodiment of the invention in which the sealing structure is an internal plug secured by a friction ring. Fig. 8A depicts a side cutaway view of an internal plug 800 having a top surface 802, a side wall surface 804, a structural fuse 808, and a friction ring 806 formed around the side wall surface. In an embodiment, the friction ring is located below the structural fuse. In an embodiment, the friction ring and the structural fuse can be used to separate a first portion (i.e., the top surface) from a second portion (i.e., the side wall surface) as described below. In an alternate embodiment, the top surface could have dimensions (e.g., width and radius) equal to the internal plug such that the sides of the top surface align with the sides of the internal plug. Fig. 8B depicts a side cutaway view of a bottle 810. Fig. 8C depicts a side view of the structural fuse 808 in the internal cap 800 of Fig. 8A that includes a perforation 820 in the side wall surface of the internal screw cap. In the embodiment of Figs. 8A - 8C, an IC package 102, such as the IC package of Fig. 2, is embedded in a portion of the top surface, and the external antenna portion 206 is embedded in a portion of the internal plug forming the side wall surface such that the external antenna portion extends across the perforation. In the embodiment, a seal is created between the internal plug and the bottle when pressure is applied to the top surface of the plug until a friction ring along the side wall surface engages with internal tabs of the bottle, thereby locking the internal plug in place.

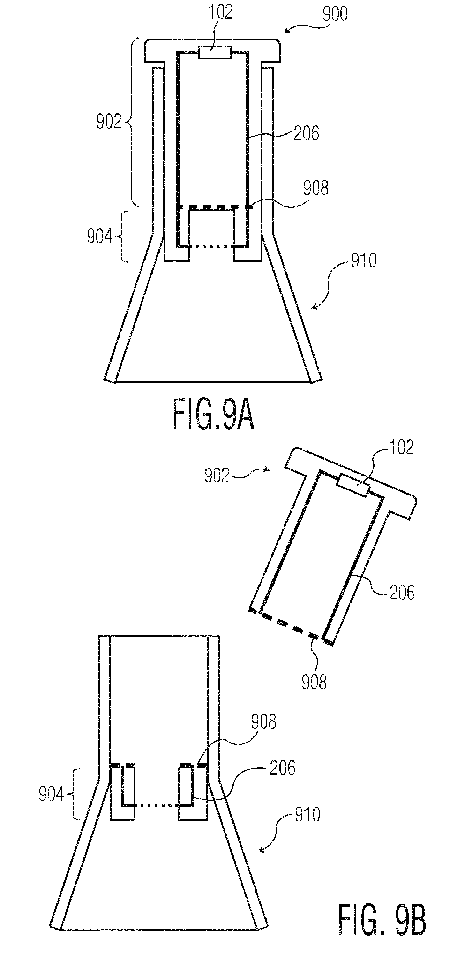

Fig. 9A illustrates a sealing structure 900 and a bottle 910, similar to the embodiments of Figs. 7A - 7C or 8A - 8C, when the bottle is sealed. The seals formed in the embodiments described with reference to Figs. 7A - 7C and 8A - 8C can be broken by rotating or removing the sealing structure. Since the friction ring is locked into place, rotating or removing the sealing structure causes a portion of the sealing structure 904 below the structural fuse (i.e., a detachable portion) 908 to separate from a portion of the sealing structure 902 above the structural fuse and remain in the bottle without obstructing the bottle. Fig. 9B illustrates the sealing structure 900 of Fig. 9A when the structural fuse 908 is torn and a portion of the sealing structure is removed from a bottle. As illustrated, the portion of the sealing structure 904 below the fuse (i.e., the detachable portion) is separated from the portion of the sealing structure 902 above the fuse. Because the external antenna portion 206 extends through both portions of the sealing structure, the external antenna portion will be severed when the portions are separated. Because the external antenna portion is severed, the NFC device will be disabled.

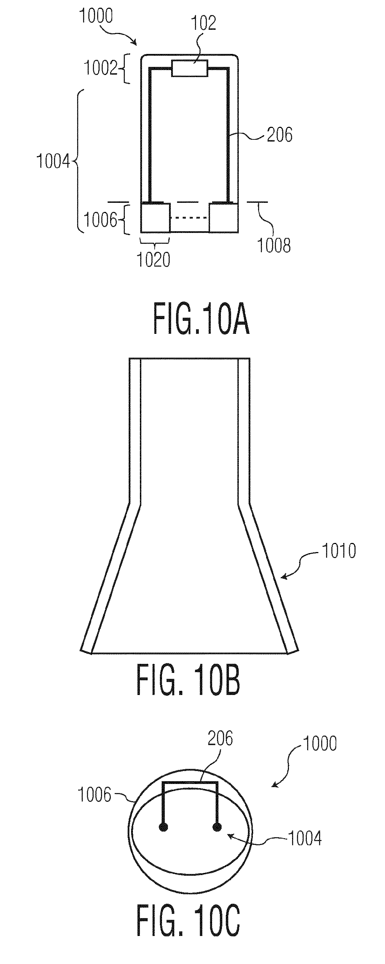

Figs. 10A - 10C illustrate an embodiment of the invention in which the sealing structure is an internal plug secured by a friction ring. Fig. 10A depicts a side cutaway view of an internal plug 1000 having a top surface 1002, a side wall surface 1004, and a friction ring 1006 formed around an indentation 1020 in the side wall surface. The indention in the side wall surface prevents the friction ring from sliding up the plug when the plug is inserted into a bottle, but allows the ring to freely slide off the bottom of the plug when the plug is removed. In an embodiment, the friction ring formed around an indention can be used to separate a first portion (i.e., the top surface) from a second portion (i.e., the friction ring) as described below. Fig. 10B depicts a side cutaway view of a bottle 1010 that can be sealed by the internal plug 1000 of Fig. 10A. Fig. 10C is a perspective view of the internal plug 1000 of Fig. 10A that illustrates the external antenna portion 206 of Fig. 2 embedded in the side wall surface of the internal plug as well as the friction ring. In the embodiment of Figs. 10A - 10C, an IC package 102, such as the IC package of Fig. 2, is embedded in a portion of the top surface and, as illustrated in Fig. 10C, the external antenna portion 206 is embedded in a portion of the internal plug that forms the side wall surface as well as a portion of the friction ring. In an embodiment, a seal is created between the internal plug and the bottle when pressure is applied to the top surface of the plug until the plug is fully encased within the bottle.

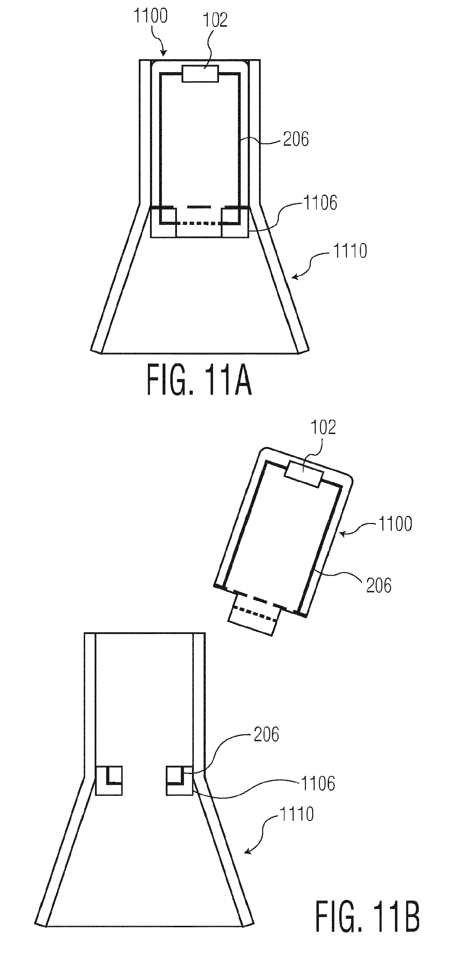

Fig. 11A illustrates an internal plug 1100 and a bottle 1110, similar to the embodiment of Figs. 10A - 10C, when the bottle is sealed. The seal formed in the embodiment described with reference to Figs. 10A - 10C can be broken by removing the internal plug from the bottle. Fig. 11B illustrates the internal plug 1100 of Fig. 11A when the internal plug is removed from the bottle. As illustrated, the internal plug slides out of the friction ring 1106 when the internal plug is removed from the bottle and the friction ring remains held in place against the sides of the bottle. However, because the external antenna portion 206 extended through the side wall surface of the internal plug as well as through the friction ring, the external antenna portion is severed when the internal plug is removed from the bottle and separated from the friction ring. Because the external antenna portion was severed, the NFC device is disabled.

The present disclosure extends to the following series of lettered clauses: (A) A sealing device for sealing a container, the sealing device comprising a body, the body comprising a first portion, a second portion, the second portion coupled to the first portion, a means for separating the first portion from the second portion when the container is unsealed, and an identification device embedded within the first portion and the second portion of the body, the identification device comprising an identifier integrated circuit (IC) within an IC package, and an antenna coupled to the identifier IC, the antenna having a portion internal to the IC package and a portion external to the IC package wherein, the portion of the antenna external to the IC package is embedded in the second portion; (B) the sealing device of clause (A), wherein the body further comprises a ring coupled between the first portion and the second portion, wherein the first portion, the second portion, and the ring are configured such that unsealing the container separates at least one of the first portion and the second portion from the ring; (C) the sealing device of clause (B), wherein the ring is a ring of high friction material formed around the second portion; (D) the sealing device of clause (A), wherein the identification device is an NFC device and the identifier IC is an NFC IC; (E) the sealing device of clause (A), wherein the IC package is embedded in the first portion and at least part of the external portion of the antenna is embedded in the second portion; (F) the sealing device of clause (A), wherein the portion of the antenna external to the IC package extends across a perforation in the second portion; (G) a sealing device for indicating unauthorized opening of a container, the sealing device comprising a sleeve, and an identification device embedded in the sleeve, the identification device comprising an identifier integrated circuit (IC) within an IC package and an antenna coupled to the identifier IC, the antenna having a portion internal to the IC package and a portion external to the IC package, wherein the portion of the antenna external to the IC package extends along the sleeve; (H) the sealing device of clause (G), wherein the portion of the antenna external to the IC package is radially embedded in the sleeve; (I) the sealing device of clause (G), wherein the portion of the antenna external to the IC package is circumferentially embedded in the sleeve; (J) a sealing device for indicating unauthorized opening of a container, the sealing device comprising an internal plug, a detachable portion coupled to the internal plug, a structural fuse between the internal plug and the detachable portion, and an identification device embedded within the internal plug and the detachable portion of the sealing device, the identification device comprising an identifier integrated circuit (IC) within an IC package, and an antenna coupled to the identifier IC, the antenna having a portion internal to the IC package and a portion external to the IC package; (K) the sealing device of clause (J), wherein the internal plug, the detachable portion, and the structural fuse are configured such that unsealing the container separates the internal plug from the detachable portion along the structural fuse; the sealing device of clause (J), wherein the portion of the antenna external to the IC package extends across a perforation in the structural fuse; the sealing device of clause 19, wherein the IC package is embedded in a portion of the internal plug and at least part of the external portion of the antenna is embedded in the detachable portion.

In the above description, specific details of various embodiments are provided. However, some embodiments may be practiced with less than all of these specific details. In other instances, certain methods, procedures, components, structures, and/or functions are described in no more detail than to enable the various embodiments of the invention, for the sake of brevity and clarity.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A sealing device for sealing a container, the sealing device comprising:
a sealing structure, the sealing structure comprising:
a top surface; and
a side wall surface; and
an identification device embedded in the sealing structure, the identification device comprising:
an identifier integrated circuit (IC) within an IC package; and
an antenna coupled to the identifier IC, the antenna having a portion internal to the IC package and a portion external to the IC package;
wherein, the portion of the antenna external to the IC package extends along a portion of the sealing structure that forms the side wall surface.

2. The sealing device of any of claims 1 and 4 - 8, wherein the sealing structure further comprises:
a first portion that forms at least a portion of the top surface;
a second portion that forms at least a portion of the side wall surface; and
a ring coupled between the first portion and the second portion, wherein the first portion, the second portion, and the ring are configured such that unsealing the container separates at least one of the first portion and the second portion from the ring.

3. The sealing device of claim 2, wherein the ring is a ring of high friction material formed around the side wall surface.

4. The sealing device of any of claims 1 and 3, wherein the identification device is an NFC device and the identifier IC is an NFC IC.

5. The sealing device of any of claims 1, 3, and 4, wherein the IC package is embedded in a portion of the sealing structure forming the top surface and at least part of the external portion of the antenna is embedded in a portion of the sealing structure forming the side wall surface.

6. The sealing device of any of claims 1 and 3 - 5, wherein the portion of the antenna external to the IC package extends across a perforation in the side wall surface.

7. The sealing device of any of claims 1 and 3 - 6, wherein the sealing device comprises thread structures for sealing the container by rotating the sealing device in relation to the container to be sealed.

8. The sealing device of any of claims 1 and 3 - 7, wherein the sealing structure comprises a shrink sleeve.

9. The sealing device of claim 2, wherein the first portion comprises an internal plug.
